# EUROPEAN PATENT SPECIFICATION

(11) **EP 0 579 228 B1**
(45) Date of publication and mention of the grant of the patent: **13.05.1998**
(21) Application number: 93111378.1
(22) Date of filing: 15.07.1993
(51) Int. Cl.: G03B 17/30, G03B 17/26

(54) **Photographic film cassette and method of assembling the photographic film cassette**
Photographische Filmkassette und Verfahren zur deren Montage
Cassette pour pellicule photographique et procédé d'assemblage de celle-ci

(30) Priority: 16.07.1992 JP 189731/92
(43) Date of publication of application: 19.01.1994
(60) Divisional application: 97103291.7
(73) Proprietor: FUJI PHOTO FILM CO., LTD., Kanagawa-ken (JP)
(72) Inventor: Esaki, Toshiro, c/o FUJI PHOTO FILM Co., LTD., Minami-Ashigara-shi, Kanagawa-ken (JP); Suzuki, Mituru, c/o FUJI PHOTO FILM Co., LTD., Minami-Ashigara-shi, Kanagawa-ken (JP); Sato, Susumu, c/o FUJI PHOTO FILM Co., LTD., Minami-Ashigara-shi, Kanagawa-ken (JP); Takahashi, Koich ,c/o FUJI PHOTO FILM Co., LTD., Minami-Ashigara-shi, Kanagawa-ken (JP); Simizu, Makoto,c/o FUJI PHOTO FILM Co., LTD., Minami-Ashigara-shi, Kanagawa-ken (JP)
(74) Representative: Grünecker, Kinkeldey, Stockmair & Schwanhäusser Anwaltssozietät

(56) References cited:
- EP-A- 0 135 372
- EP-A- 0 436 767
- EP-A- 0 442 501
- EP-A- 0 543 182
- WO-A-91/11383
- PATENT ABSTRACTS OF JAPAN vol. 1, no. 142 (E-65)18 November 1977 & JP-A-52 077 723 (FUJI PHOTO FILM) 30 June 1977

## Description

The present invention relates to a method for assembling a photographic film cassette, and to a photographic film cassette for performing this method.

A method for assembling photographic film cassette is described in later published EP543182 A1. The trailing end portion of the photographic film has a pair of identical holes formed therein. The core of the spool has corresponding hook portions adapted to engage the holes of the trailing end portion of the film strip, so that the photographic film can be wound on the core by rotating the spool.

W091/11383 describes a strip material dispenser comprising a core for winding. The core has two lateral spindles which are coaxially aligned and are arranged spaced with respect to each other. Within the space a spindle of smaller diameter is arranged, connecting the two lateral spindles to each other. The spindle of smaller diameter is arranged offset with respect to the aligned axis of the two lateral spindles, so that when rotating the spool the smaller spindle circumscribes a circle around the axis of the core. The strip material is provided with a leader having a width smaller than or equal to the length of the smaller spindle. The leader is attached to the smaller spindle, and the core is rotated to wound at first the leader around the smaller spindle and thereafter the strip material onto the lateral spindles. The smaller width of the leader compared to the width of the strip material may cause wrinkling of the leader if the spool and the strip are not held exactly perpendicular to each other. Due to the eccentric arrangement of smaller spindle with respect to the spool more of the length of the leader will be drawn into the cassette shell then may be convoluted onto the smaller spindle, so that the leader could not be closely wound onto the smaller spindle. This also increases the danger of wrinkling.

JP-A-52-77723 describes a method for winding a film strip onto the spool of a film cassette using a flexible guide band piece. The flexible guide band piece is releasibly attached to the spool and protrudes out of the passage mouth of the cassette shell. The film is inserted along the upper surface of the guide band piece and is thereafter attached to the spool. Thereafter, the film, together with the guide band piece, is wound onto the spool.

EP442501 A3 describes the photographic film cassette for containing a photographic film wound around a spool, arranged in a cassette shell in light-tight manner. Rotation of the spool causes a film leader to advance out of the cassette shell. The shell has to two shell halves each moulded from plastic.

There further have been proposed photographic film cassettes, wherein an entire photographic film is preliminarily contained within a plastic cassette shell in an unused state, as disclosed in e.g., US-A-4,834,306. The leading end of the photographic film is advanced out of the cassette shell by rotating a spool. In order to assemble such a photographic film cassette, the photographic film is first wound completely on the spool in a darkroom, all of which are then accommodated in between two cassette shell halves constituting the cassette shell. Thereafter, the joint of the shell halves made of a resin material is secured by ultrasonic wave.

Thus, the ultrasonic welding is indispensable to attach the plastic shell halves since plastic has a low degree of heat tolerance. However, during the ultrasonic welding, vibrations are generated due to the ultrasonic wave, which causes the photographic film to be scratched. Also, if an assembling machine is get out of order, it takes much time to analyze its cause as well as to repair the assembling machine in a dark room compared with a lighted room, resulting in reduction of operation efficiency and increase of burden to the operator. If the darkroom is switched to be lighted for analyses and repair, a lot of photographic films put in the assembly line will be damaged.

In view of the foregoing, a primary object of the present invention is to provide a method of assembling a photographic film cassette wherein ineffective process in the darkroom can be reduced.

Another object of the present invention is to provide a photographic film cassette which can be effectively assembled.

To achieve the above and other objects, the method of claim 1 and the photographic film cassette of claim 9 are provided. According to the assembling method of the present invention, shell halves are joined together, for example, by ultrasonic welding, to form a cassette shell, while accommodating a spool in the cassette shell and, thereafter, the cassette shell is transported in a dark room, wherein a strip of photographic film is connected to the spool and wound about the spool by rotating the spool.

The photographic film is directly secured to a spool having an engaging member formed therein and a film guide member formed integrally therewith. The film guide member is constituted of a film guide sheet or a pair of guide strips. A free end or free ends of the guide member protrude slightly from the film passage mouth to the outside of the cassette shell. One end of the photographic film is guided along the film guide member into the cassette shell toward the engaging member of the spool, thereby to bring the end of the photographic film into engagement with the engaging member. Thereafter, the spool is rotated to wind the photographic film into the cassette shell when assembling the photographic film cassette.

In this way, such process that must be performed in the dark room is reduced.

The foregoing objects and advantages of this invention will become apparent to the person skilled in the art from the following detailed description of the invention when read in conjunction with the accompanying drawings, in which:
Fig. 1 is a perspective view illustrating a spoll having a guide sheet according to the present invention;
Fig. 2 is a cross section illustrating a process gor attaching a photographic film to the spool in Fig. 1;
Fig. 3 is a perspective view illustrating a spool having guide strips; and
Fig. 4 is a perspective view illustrating a photographic film cassette whose cassette shell halves are fixedly engaged with each other before welding.

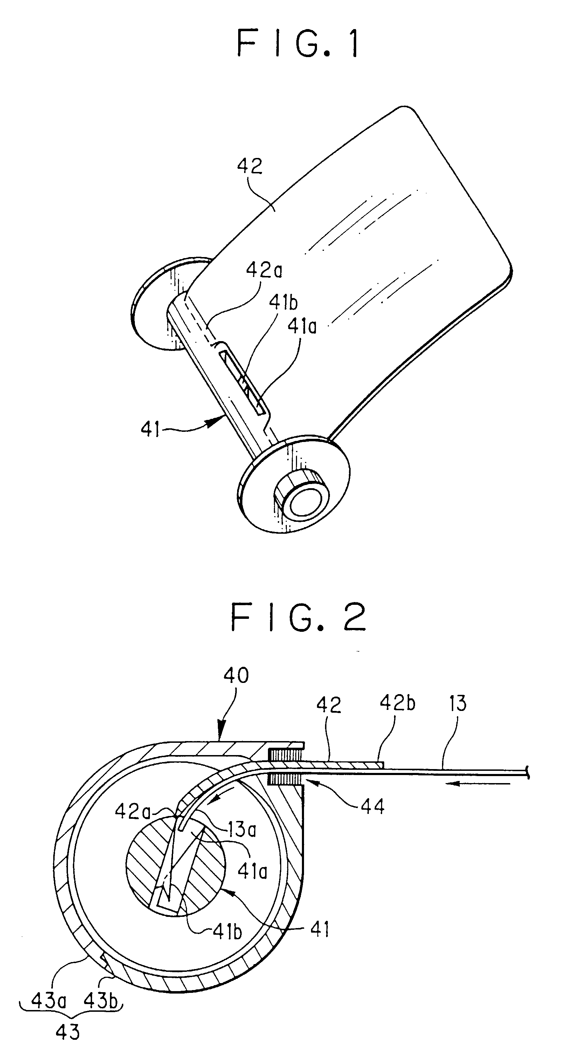

Figs. 1 and 2 show a photographic film cassette 40 according to a first embodiment of the present invention, wherein a spool 41 has a guide sheet 42 integrally formed therewith. The guide sheet 42 serves to guide a trailing end 13a of a photographic film 13 into a slit 41a formed in the spool 41 and to secure it to the spool 41 by means of claws 41b formed within the slit 41a. The width of the guide sheet 42 is approximately equal to that of the photographic film 13.

A border portion 42a of the guide sheet 42 on the spool 41 is formed thinner than the other portion of the guide sheet 42 so that the guide sheet 42 is separated from the spool 41 when pulled with a strong force after the photographic film 13 has been secured to the spool 41.

The spool 41 is accommodated in a cassette shell 43 in a state with the free end of the guide sheet 41a projected from a film passage mouth 44 to the outside, when upper and lower shell halves 43a and 43b made of resin material are joined securely by ultrasonic welding to form the cassette shell 43 in a lighted room. Then, the cassette shell 43 is transferred to a darkroom, where the trailing end 13a of the photographic film 13 is inserted through the film passage mouth 44, guided into the slit 41a along the guide sheet 42 arrested by the claws 41b. Thereafter, the guide sheet 42 is separated from the spool 41 and discarded. The photographic film 13 is then wound within the cassette shell 43 by rotation of the spool 41, resulting in completion of the photographic film cassette 40.

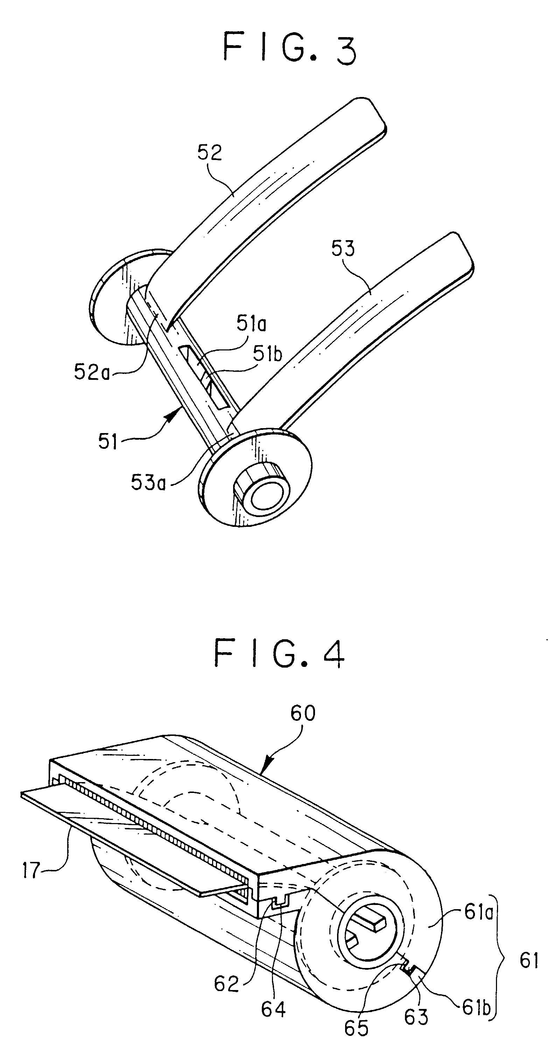

Fig. 3 shows a spool 51 having a pair of guide strips 52 and 53 formed integrally therewith on opposite lateral sides of a slit 51a of the spool 51. This embodiment is an improvement of the spool 41 having the guide sheet 42 shown in Fig. 1, and designed so as to save the spool material. The guide strips 52 and 53 can be easy to tear off the spool 51 along thin wall portions 52a and 53a. The spool 51 is accommodated in a cassette shell (not shown) with the free ends of the guide strips 52 and 53 projected from a film passage mouth at the time of assembly the same as in the first embodiment. An end of a photographic film is inserted in the film passage mouth, guided into the slit 51a along the guide strips 52 and 53, and secured to the spool 51 by means of a claw 51b formed in the slit 51a. Thereafter, when the guide strips 52 and 53 are pulled, they are cut from the spool 51 along the thin wall portions 52a and 53a.

Fig. 4 shows another embodiment of a photographic film cassette 60, wherein upper and lower shell halves 61a and 61b constituting a cassette shell 61 is prevented from the displacement during the ultrasonic welding. The upper shell half 61a is provided with projections 62 and 63 while the lower shell half 61b is provided with cutouts 64 and 65 at corresponding portions to the projections 62 and 63. Further, e.g., the projections 62 and 63 are provided at their inner portions with claws while the cutouts 64 and 65 are provided at corresponding portions to the claws with recesses. Accordingly, the upper and lower shell halves 61a and 61b can be fixedly mated together by fitting the projections 62 and 63 in the respective cutouts 64 and 65.

The guide sheet 17 or the guide strips are separated from the spool in the above-described embodiment.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, as defined by the appended claims, they should be construed as included therein.

## Claims

1. A method of assembling a photographic film cassette (40,60) having a cassette shell (43,61) consisting of two plastic shell halves (43a,43b,61a,61b) and a rotatable spool (41,51) with a photographic film (13) wound thereon, wherein a leading end of said photographic film (13) is advanced out of said cassette shell through a film passage mouth (44) formed in said cassette shell by rotation of said spool, said method comprising the steps of:
forming said spool (41,51) integrally with a film guide means (42,52,53), said film guide means (42,52,53) being connected to said spool (41,51) by a breakable border portion (42a,52a,53a) ;
joining said plastic shell halves (43a,43b,61a,61b) to one another to form said shell (43,61) after having inserted said spool therebetween, with a free end of said film guide means (42,52,53) projecting from said film passage mouth (44) to the outside of said cassette shell (43,61);
guiding a trailing end (13a) of said photographic film (13) along said film guide means (42,52,53) toward said spool (41,51) through said film passage mouth (44) ;
connecting said trailing end (13a) of said photographic film (13) to said spool (41,51) through an engaging means (41a,41b,51a,51b) formed in said spool;
separating said film guide means (42,52,53) from said spool (41,51) by breaking said border portion (42a,52a, 53a) ; and
winding said photographic film (13) completely in said cassette shell (43,61) by rotating said spool (41,51).

2. A method as recited in claim 1, wherein said joining step comprises the steps of: mating said shell halves (43a,43b,61a,61b) together; and thereafter securing joints of said shell halves by ultrasonic welding.

3. A method as recited in claim 1 or 2, wherein -said shell halves (61a,61b) are fixedly mated together through engagement (62,63,64,65).

4. A method as recited in any one of claims 1 to 3, wherein said film guide means (42; 52, 53) includes a film guide member comprising a thin wall portion (42a; 52a, 53a) in said breakable border portion on said spool (41,51) and said method further comprises the step of pulling said film guide member so as to forcibly separate said film guide member from said spool after said connecting step.

5. A method as recited in claim 3 or 4, wherein projections (62,63) are formed in one (61a) of said shell halves, and cut-outs (64,65) are formed in the other (61b) of said shell halves in correspondence with said projections, said projections being fitted in said cut-outs to provide a fixed engagement between said shell halves.

6. A method as recited in any one of claims 1 to 5, wherein a slit (41a,51a) is formed in said spool in an axial direction of said spool; and at least a claw (41b,51b) is formed inside said slit for securing a trailing end of said photographic filmstrip to said spool.

7. A method as recited in any one of claims 1 to 6, wherein said film guide member is constructed as a sheet (42) disposed along said slit (41a).

8. A method as recited in any one of claims 1 to 6, wherein said film guide member is constructed as a pair of strips (52,53) disposed on opposite lateral sides of said slit (51a).

9. A photographic film cassette (40,60) for performing the method of any one of claims 1 to 8, comprising a cassette shell (43,61) consisting of a pair of shell halves (43a,43b,61a,61b) made of a resin material, a film passage mouth (44) formed in a border portion between said shell halves, a spool (41,51) rotatably mounted in said cassette shell and arranged for receiving a photographic filmstrip (13) adapted to be coiled about said spool,
a slit (41a,51a) formed in said spool in an axial direction of said spool;
at least a claw (41b,51b) formed inside said slit for securing a trailing end (13a) of said photographic filmstrip to said spool; and
a film guide member (42;52,53) formed integrally with said spool for guiding said trailing end of said photographic filmstrip into said slit,
so that a free end of said film guide member is placed outside said cassette shell through said film passage mouth when said shell halves are joined together to form said cassette shell and before said photographic filmstrip is secured to said spool and wound into said cassette shell by rotating said spool; and
said film guide member having a thin wall portion (42a;52a,53a) in a breakable border portion on said spool so as to facilitate separating said film guide member from said spool.

10. A photographic film cassette as recited in claim 9, wherein said film guide member is constructed as a sheet (42) disposed along said slit (41a).

11. A photographic film cassette as recited in claim 9, wherein said film guide member is constructed as a pair of strips (52,53) disposed on opposite lateral sides of said slit (51a).

## Patentansprüche

1. Verfahren zum Montieren einer fotografischen Filmkassette (40, 60) mit einer Kassettenhülse (43, 61), die aus zwei Kunststoffhülsenhälften (43a, 43b, 61a, 61b) besteht und mit einer drehbaren Spule (41, 51), mit einem darauf aufgewickelten Fotofilm (13), wobei ein vorlaufendes Ende des Fotofilms (13) aus der Kassettenhülse durch eine in der Kassettenhülse ausgebildete Filmdurchtrittsöffnung (44) durch Drehung der Spule herausgeschoben wird, wobei das Verfahren die folgenden Verfahrensschritte enthält:
Ausbilden der Spule (41, 51) einstückig mit einer Filmführungseinrichtung (42, 52, 53), wobei die Filmführungseinrichtung (42, 52, 53) mit der Spule (41, 51) über einen zerbrechbaren Grenzbereich (42a, 52a, 53a) verbunden ist;
Verbinden der Kunststoffhülsenhälften (43a, 43b, 61a, 61b) miteinander, um die Hülse (43, 61) zu bilden, nachdem die Spule dazwischengesetzt wurde, wobei ein freies Ende der Filmführungseinrichtung (42, 52, 53) aus der Filmdurchtrittsöffnung (44) zur Außenseite der Kassettenhülse (43, 61) vorsteht;
Führen eines nachlaufenden Endes (13a) des Fotofilms (13) entlang der Filmführungseinrichtung (42, 52, 53) in Richtung auf die Spule (41, 51) durch die Filmdurchtrittsöffnung (44);
Verbinden des nachlaufenden Endes (13a) des Fotofilms mit der Spule (41, 51) über eine Eingriffseinrichtung (41a, 41b, 51a, 51b), die in der Spule ausgebildet sind;
Trennen der Filmführungseinrichtung (42, 52, 53) von der Spule (41, 51) durch Zerbrechen des Grenzbereichs (42a, 52a, 53a); und
Aufwickeln des Fotofilms vollständig in die Kassettenhülse (43, 61) durch Drehen der Spule (41, 51).

2. Verfahren nach Anspruch 1, wobei der Verbindungsschritt die folgenden Schntte umfaßt:
Zusammensetzen der Hülsenhälften (43a, 43b, 61a, 61b) und anschließend Verbinden der Verbindungsstellen der Hülsenhälften durch Ultraschallschweißen.

3. Verfahren nach Anspruch 1 oder 2, wobei die Hülsenhälften (61a, 61b) fest durch Eingriff (62, 63, 64, 65) zusammengepaßt sind.

4. Verfahren nach einem der Ansprüche 1 bis 3, wobei die Filmführungseinrichtung (42; 52, 53) ein Filmführungsteil mit einem Dünnwandbereich (42a; 52a, 53a) im zerbrechbaren Grenzbereich an der Spule (41, 51) enthält, und wobei das Verfahren femer den Verfahrensschritt des Ziehens am Filmführungsteil umfaßt, so daß unter Kraftaufwendung das Filmführungsteil von der Spule nach dem Verbindungsschritt getrennt wird.

5. Verfahren nach Anspruch 3 oder 4, wobei Vorsprünge (62, 63) in einer (61a) der Hülsenhälften ausgebildet sind, und wobei Ausschnitte (64, 65) in der anderen (61b) der Hülsenhälften entsprechend den Vorsprüngen ausgebildet sind, wobei die Vorsprünge in die Ausschnitte eingepaßt sind, um einen festen Eingriff zwischen den Hülsenhälften zu schaffen.

6. Verfahren nach einem der Ansprüche 1 bis 5, wobei in der Spule ein Schlitz (41a, 51a) in Axialrichtung in der Spule ausgebildet ist und mindestens eine Klaue (41b, 51b) innerhalb des Schlitzes ausgebildet ist, um ein nachlaufendes Ende des fotografischen Filmstreifens an der Spule zu befestigen.

7. Verfahren nach einem der Ansprüche 1 bis 6, wobei das Filmführungsteil als Platte (42) ausgebildet ist, die entlang des Schlitzes (41a) angeordnet ist.

8. Verfahren nach einem der Ansprüche 1 bis 6, wobei das Filmführungsteil als ein Paar von Streifen (52, 53) konstruiert ist, die an gegenüberliegenden Seiten des Schlitzes (51a) angeordnet sind.

9. Fotografische Filmkassette (40, 60) zum Durchführen des Verfahrens nach einem der Ansprüche 1 bis 8, mit einer Kassettenhülse (43, 61), die ein Paar von aus Kunstharzmaterial hergestellten Hülsenhälften (42a, 43b, 61a, 61b) umfaßt, einer in einem Grenzbereich zwischen den Hülsenhälften ausgebildeten Filmdurchtrittsöffnung (44), einer Spule (41, 51), die in der Kassettenhülse drehbar montiert und so ausgebildet ist, daß sie einen Fotofilmstreifen (13) aufnehmen kann, der so ausgebildet ist, daß er um die Spule gewickelt werden kann,
einem in der Spule in Axialrichtung der Spule ausgebildeten Schlitz (41a, 51a);
mindestens einer Klaue (41b, 51b), die im Schlitz ausgebildet ist, um ein nachlaufendes Ende (13a) des Fotofilmstreifens an der Spule zu befestigen; und
einem Filmführungsteil (42; 52, 53), das einstückig mit der Spule ausgebildet ist, um das nachlaufende Ende des Fotofilmstreifens in den Schlitz zu leiten,
so daß ein freies Ende des Filmführungsteils außerhalb der Kassettenhülse durch die Filmdurchtrittsöffnung angeordnet ist, wenn die Hülsenhälften miteinander verbunden sind, um die Kassettenhülse zu bilden, und bevor der Fotofilmstreifen an der Spule befestigt und in die Kassettenhülse durch Drehen der Spule aufgewickelt wird; und
wobei das Filmführungsteil einen Dünnwandbereich (42a; 52a, 53a) in einem zerbrechbaren Grenzbereich an der Spule aufweist, um das Trennen des Filmführungsteils von der Spule zu erleichtern.

10. Fotografische Filmkassette nach Anspruch 9, wobei das Filmführungsteil als Platte (42) ausgebildet ist, die entlang des Schlitzes (41a) angeordnet ist.

11. Fotografische Filmkassette nach Anspruch 9, wobei das Filmführungsteil als ein Paar von Streifen (52, 53) ausgebildet ist, die an gegenüberliegenden Seiten des Schlitzes (51a) angerordnet sind.

## Revendications

1. Procédé d'assemblage d'une cartouche (40, 60) pour film photographique comportant une enveloppe (43, 61) de cartouche constituée de deux moitiés (43a, 43b, 61a, 61b) d'enveloppe en plastique et d'une bobine (41, 51) mobile en rotation avec un film photographique (13) enroulé sur celle-ci, dans lequel, par rotation de ladite bobine, une amorce dudit film photographique (13) sort de ladite enveloppe de cartouche à travers une embouchure (44) de passage de film formée dans ladite enveloppe de cartouche, ledit procédé comprenant les étapes :
de formation de ladite bobine (41, 51) d'une seule pièce avec un moyen (42, 52, 53) de guidage de film, ledit moyen (42, 52, 53) de guidage de film étant raccordé à ladite bobine (41, 51) par une partie lisière cassante (42a, 52a, 53a) ;
de jonction desdites moitiés (43a, 43b, 61a, 61b) d'enveloppe en plastique l'une à l'autre pour former ladite enveloppe (43, 61) après avoir introduit ladite bobine entre les deux, une extrémité libre dudit moyen (42, 52, 53) de guidage de film dépassant, de ladite embouchure (44) de passage de film, à l'extérieur de ladite enveloppe (43, 61) de cartouche ;
de guidage d'une extrémité (13a) de queue dudit film photographique (13) le long dudit moyen (42, 52, 53) de guidage de film en direction de ladite bobine (41, 51), à travers ladite embouchure (44) de passage de film ;
de liaison de ladite extrémité (13a) de queue dudit film photographique (13) à ladite bobine (41, 51) à l'aide d'un moyen d'accrochage (41a, 41b, 51a, 51b) formé dans ladite bobine ;
de séparation dudit moyen (42, 52, 53) de guidage de film de ladite bobine (41, 51) par rupture de ladite partie lisière (42a, 52a, 53a) ; et
de bobinage dudit film photographique (13) complètement dans ladite enveloppe (43, 61) de cartouche par rotation de ladite bobine (41, 51).

2. Procédé selon la revendication 1, dans lequel ladite étape de jonction comprend les étapes : d'accouplement desdites moitiés (43a, 43b, 61a, 61b) d'enveloppe l'une à l'autre ; et ensuite de fixation de la jonction desdites moitiés d'enveloppe par soudage aux ultrasons.

3. Procédé selon la revendication 1 ou 2, dans lequel lesdites moitiés (61a, 61b) d'enveloppe sont accouplées à demeure l'une à l'autre par accrochage (62, 63, 64, 65).

4. Procédé selon l'une quelconque des revendications 1 à 3, dans lequel ledit moyen (42 ; 52, 53) de guidage de film comprend un élément de guidage de film comportant une partie (42a ; 52a, 53a) à paroi mince dans ladite partie lisière cassante sur ladite bobine (41, 51), et dans lequel ledit procédé comprend en outre l'étape de traction sur ledit élément de guidage de film de façon à séparer de force ledit élément de guidage de film de ladite bobine, après ladite étape de raccordement.

5. Procédé selon l'une quelconque des revendications 3 ou 4, dans lequel des saillies (62, 63) sont formées dans l'une (61a) desdites moitiés d'enveloppe, et des découpes (64, 65) sont formées dans l'autre (61b) desdites moitiés d'enveloppe en correspondance avec lesdites saillies, lesdites saillies s'introduisant dans lesdites découpes pour accrocher à demeure lesdites moitiés d'enveloppe.

6. Procédé selon l'une quelconque des revendications 1 à 5, dans lequel une fente (41a, 51a) est formée dans ladite bobine dans une direction axiale dans ladite bobine ; et dans lequel au moins une griffe (41b, 51b) est formée à l'intérieur de ladite fente pour fixer, à ladite bobine, une extrémité de queue de ladite bande de film photographique.

7. Procédé selon l'une quelconque des revendications 1 à 6, dans lequel ledit élément de guidage de film est constitué comme une feuille (42) disposée le long de ladite fente (41a).

8. Procédé selon l'une quelconque des revendications 1 à 6, dans lequel ledit élément de guidage de film est constitué comme une paire de bandes (52, 53) disposées sur les côtés latéraux opposés de ladite fente (51a).

9. Cartouche (40, 60) pour film photographique destinée à mettre en oeuvre le procédé selon l'une quelconque des revendications 1 à 8, comprenant : une enveloppe (43, 61) de cassette constituée d'une paire de moitiés (43a, 43b, 61a, 61b) d'enveloppe faite d'une matière à base de résine, une embouchure (44) de passage de film formée dans une partie lisière entre lesdites moitiés d'enveloppe, une bobine (41, 51) montée mobile en rotation dans ladite enveloppe de cartouche et conçue pour recevoir une bande de film photographique (13) apte à être bobinée autour de ladite bobine ;
une fente (41a, 51a) formée dans ladite bobine dans une direction axiale de ladite bobine ;
au moins une griffe (41b, 51b) formée à l'intérieur de ladite fente pour fixer une extrémité (13a) de queue de ladite bande de film photographique à ladite bobine ; et
un élément (42 ; 52, 53) de guidage de film formé d'un seul tenant avec ladite bobine pour guider ladite extrémité de queue de ladite bande de film photographique dans ladite fente,
de façon qu'une extrémité libre dudit élément de guidage de film sorte à l'extérieur de ladite enveloppe de cartouche, par ladite embouchure de passage de film, lorsque lesdites moitiés d'enveloppe sont liées l'une à l'autre pour former ladite enveloppe de cartouche et avant que ladite bande de film soit fixée à ladite bobine et enroulée dans ladite enveloppe de cartouche par rotation de ladite bobine ; et
ledit élément de guidage de film ayant une partie (42a ; 52a, 53a) à paroi mince dans une partie lisière cassante sur ladite bobine de façon à faciliter la séparation dudit élément de guidage de film de ladite bobine.

10. Cartouche pour film photographique selon la revendication 9, dans laquelle ledit élément de guidage de film est constitué comme une feuille (42) disposée le long de ladite fente (41a).

11. Cartouche pour film photographique selon la revendication 9, dans laquelle ledit élément de guidage de film est constitué comme une paire de bandes (52, 53) disposées sur les côtés latéraux opposés de ladite fente (51a).
